# EUROPÄISCHE PATENTSCHRIFT

(11) **EP 1 516 147 B1**
(45) Veröffentlichungstag und Bekanntmachung des Hinweises auf die Patenterteilung: **09.08.2006**
(21) Anmeldenummer: 03761385.8
(22) Anmeldetag: 17.06.2003
(51) Int. Cl.: F24F 6/14

(54) **BEFEUCHTUNGSVORRICHTUNG**
HUMIDIFIER
DISPOSITIF D'HUMIDIFICATION

(30) Priorität: 26.06.2002 CH 110502
(43) Veröffentlichungstag der Anmeldung: 23.03.2005
(73) Patentinhaber: Axair AG, 8808 Pfäffikon SZ (CH)
(72) Erfinder: INEICHEN, Kurt, CH-6020 Emmenbrücke (CH); SZPILSKI, Andrzej, CH-8834 Schindellegi (CH)
(74) Vertreter: Bollhalder, Renato
(86) Internationale Anmeldenummer: PCT/CH2003/000390
(87) Internationale Veröffentlichungsnummer: WO 2004/003440

(56) Entgegenhaltungen:
- EP-A- 0 526 393
- EP-A- 0 590 328
- EP-A- 0 957 321
- WO-A-95/10009
- DE-U- 8 708 201
- DE-U- 20 014 241
- US-A- 3 734 111
- US-A- 5 037 585
- US-A- 6 135 629

## Beschreibung

Die vorliegende Erfindung bezieht sich auf eine Befeuchtungsvorrichtung, wie sie im Oberbegriff des unabhängigen Patentanspruchs 1 definiert ist.

Um beispielsweise die Luftfeuchtigkeit in einem Raum zu erhöhen, ist es bekannt, dem Raum feuchte Luft zuzuführen. Die Luft gelangt dabei normalerweise über einen Luftkanal in den Raum und wird im Luftkanal mit Wasser befeuchtet. Zur Befeuchtung der durch den Luftkanal strömenden Luft werden verschiedene Verfahren angewendet. Ein effizientes Verfahren umfasst die Zerstäubung von Wasser im Luftstrom, wobei hierzu von Düsen Wasser in den Luftstrom gesprüht wird. Mit unterschiedlichsten Vorrichtungen ist versucht worden, eine optimale Verteilung der Wasserteilchen im Luftstrom und eine möglichst geringe Wasserabscheidung durch Tropfenbildung zu erreichen.

In der WO 95/10009 sind ein solches Verfahren und eine Befeuchtungsvorrichtung offenbart, die durch Erzeugung einer Turbulenz im Luftstrom für eine Verteilung der von Düsen in den Luftstrom gesprühten Wasserteilchen sorgt. Durch Prallflächen vor den Düsen werden die von den Düsen erzeugten Sprühstrahlen aufgeweitet.

Die EP-A-0 957 321 offenbart eine Befeuchtungsvorrichtung, bei der durch in Luftströmungsrichtung vor Düsen angeordnete Prallplatten mit Luftdurchlass-Öffnungen eine Verwirbelung der durchströmenden Luft bewirkt wird, die eine unkontrollierte Aufweitung der von den Düsen erzeugten Sprühstrahlen zur Folge hat.

In Anbetracht dessen, dass mit den bisher bekannten Befeuchtungsvorrichtungen nicht immer eine effiziente Befeuchtung der durchströmenden Luft erreicht wird, liegt der Erfindung die folgende Aufgabe zugrunde. Zu schaffen ist eine Befeuchtungsvorrichtung der eingangs erwähnten Art, mit der eine optimale Verteilung der Wasserteilchen im durchströmenden Luftstrom und eine möglichst geringe Wasserabscheidung erreicht werden kann.

Diese Aufgabe wird durch die erfindungsgemässe Befeuchtungsvorrichtung gelöst, wie sie im unabhängigen Patentanspruch 1 definiert ist. Bevorzugte Ausführungsvarianten ergeben sich aus den abhängigen Patentansprüchen.

Das Wesen der Erfindung besteht im Folgenden: Eine Befeuchtungsvorrichtung zur Befeuchtung von Gas in einem Gasstrom umfasst mindestens eine Düse, die im Gasstrom in Strömungsrichtung eine Flüssigkeit absprüht, und eine Einrichtung zur Aufweitung des von der Düse erzeugten Sprühstrahls. Die Sprühstrahl-Aufweiteinrichtung ist ausgebildet, um den Gasstrom im Bereich der Düse teilweise umzulenken, so dass zwischen der Sprühstrahl-Aufweiteinrichtung und dem Sprühstrahl ein Unterdruck entsteht, durch den der Sprühstrahl aufgeweitet wird. Die Sprühstrahl-Aufweiteinrichtung lässt den Gasstrom zumindest teilweise so durch sie durchströmen, dass durchströmendes Gas eine Benetzung ihrer dem Sprühstrahl zugewandten Seite zumindest vermindert. Erfindungsgemäss ist die Sprühstrahl-Aufweiteinrichtung mindestens zweischenklig ausgebildet.

Als Gas wird normalerweise Luft verwendet, während als Flüssigkeit im Allgemeinen Wasser eingesetzt wird.

Dadurch, dass durch die Umlenkung des Gasstroms zwischen der Sprühstrahl-Aufweiteinrichtung und dem durch die Düse erzeugten Sprühstrahl ein Unterdruck entsteht, werden die Randbereiche des Sprühstrahls nach aussen gesogen, d.h. der Sprühstrahl weitet sich auf. Indem die Sprühstrahl-Aufweiteinrichtung den Gasstrom zumindest teilweise in geeigneter Weise durch sie durchströmen lässt, kann eine Benetzung der dem Sprühstrahl zugewandten Seite der Sprühstrahl-Aufweiteinrichtung und allfälliger Kanalwände vermindert oder sogar ganz verhindert werden. Die erfindungsgemässe Befeuchtungsvorrichtung bewirkt eine schnelle und gleichmässige Verteilung der von der mindestens einen Düse abgesprühten Flüssigkeitsteilchen, ohne dass an der Sprühstrahl-Aufweiteinrichtung oder an Kanalwänden viel Flüssigkeit verloren geht. Die erfindungsgemässe Befeuchtungsvorrichtung funktioniert praktisch unabhängig von der Geschwindigkeit des Gasstroms und auch bei stark unterschiedlichen Gasgeschwindigkeiten innerhalb des Gasstroms. Ausserdem ermöglicht sie die Positionierung der Düsen nahe an den Kanalwänden.

Mit Vorteil ist die Sprühstrahl-Aufweiteinrichtung so ausgebildet, dass das durchströmende Gas die Aufweitung des Sprühstrahls begrenzt. Dabei werden die Flüssigkeitsteilchen am Rand des durch den Unterdruck aufgeweiteten Sprühstrahls durch das auftreffende Gas zurückgedrängt. Zu diesem Zweck muss durch die Sprühstrahl-Aufweiteinrichtung genügend Gas mit einer genügend grossen Geschwindigkeit durchgelassen werden. Zuviel Gas mit einer zu grossen Geschwindigkeit darf die Sprühstrahl-Aufweiteinrichtung aber auch nicht passieren, damit der Sprühstrahl nicht unnötig eingeengt wird.

Vorteilhafterweise ist die Sprühstrahl-Aufweiteinrichtung so ausgebildet, dass das durchströmende Gas ein entlang ihrer dem Sprühstrahl zugewandten Seite strömendes Gaspolster bildet. Durch das Gaspolster wird verhindert, dass Flüssigkeitsteilchen aus dem Sprühstrahl mit der Sprühstrahl-Aufweiteinrichtung in Kontakt treten.

Mit Vorteil weist die Sprühstrahl-Aufweiteinrichtung eine Vielzahl von Öffnungen auf, deren Öffnungsquerschnittsfläche jeweils 0,2 mm² - 30 mm², vorzugsweise 1 mm² - 3 mm², beträgt. Öffnungen mit solchen Öffnungsquerschnittsflächen, die ausserdem möglichst gleichmässig verteilt sind, haben sich als geeignet erwiesen, eine Benetzung der Sprühstrahl-Aufweiteinrichtung weitgehend zu verhindern.

Bevorzugt beträgt der Anteil der Öffnungen an der Fläche der Sprühstrahl-Aufweiteinrichtung 10%-40%, vorzugsweise 20%-30%. Ein solcher Anteil gewährleistet eine Gasdurchflussrate und eine Aufweitung des Sprühstrahls im gewünschten Ausmass, d.h. ohne dass es zu einer Benetzung der Sprühstrahl-Aufweiteinrichtung kommt bzw. höchstens zu einer deutlich kleineren als bei einer Sprühstrahl-Aufweiteinrichtung, die kein Gas durchströmen lässt.

Bei einer bevorzugten Ausführungsvariante sind die Öffnungen runde Löcher mit einem Durchmesser von maximal 5 mm, vorzugsweise mit einem Durchmesser von 1 mm - 2 mm. Solche Löcher ermöglichen eine gleichmässige Gasströmung und können vergleichsweise einfach hergestellt werden.

Vorteilhafterweise ist die Sprühstrahl-Aufweiteinrichtung zumindest teilweise flächig ausgebildet und in einem Winkel zur Strömungsrichtung des Gasstroms angeordnet, der gleich dem halben Öffnungswinkel des Sprühstrahls ± 30°, vorzugsweise ± 10°, ist. Der von der Düse in Strömungsrichtung des Gasstroms abgesprühte Sprühstrahl weist einen Öffnungswinkel auf, der sich normalerweise hälftig beidseits der geraden Absprührichtung erstreckt, die der Strömungsrichtung des Gasstroms entspricht. Dabei ist der Sprühstrahl im Allgemeinen kegelförmig, denkbar ist aber beispielsweise auch ein sich über eine gewisse Grundbreite erstreckender Sprühstrahl, wenn eine Flachdüse verwendet wird. Die gewählte Anordnung der Sprühstrahl-Aufweiteinrichtung sorgt für einen geeigneten Abstand zwischen dem Sprühstrahl und der dem Sprühstrahl zugewandten Seite der Sprühstrahl-Aufweiteinrichtung und eine geeignete Aufweitung des Sprühstrahls. Zu beachten ist, dass mit "Öffnungswinkel" im vorliegenden Zusammenhang der Öffnungswinkel des von der Düse abgesprühten, nicht aufgeweiteten Sprühstrahls gemeint ist.

Bei einer bevorzugten Ausführungsvariante ist die Sprühstrahl-Aufweiteinrichtung in Strömungsrichtung des Gasstroms gesehen am Ende nach aussen vom Sprühstrahl weg gebogen. Dies hat ein gleichmässigeres Aufweiten des Sprühstrahls am Ende der Sprühstrahl-Aufweiteinrichtung zur Folge und verhindert ein Zurückreissen von Flüssigkeitsteilchen aufgrund von Wirbelbildung, was zu einer Benetzung der Sprühstrahl-Aufweiteinrichtung führen würde.

Mit Vorteil ist die Sprühstrahl-Aufweiteinrichtung zweischenklig ausgebildet und weitet sich der Sprühstrahl zwischen den beiden Schenkeln auf. Solche Sprühstrahl-Aufweiteinrichtungen bewirken die gewünschte Aufweitung des Sprühstrahls ohne Benetzung der Sprühstrahl-Aufweiteinrichtung auf effiziente Weise und können ausserdem kostengünstig hergestellt werden.

Bei einer vorteilhaften Ausführungsvariante ist die Düse eine Hochdruckdüse mit einem Betriebsdruck ≥ 10 bar, vorzugsweise ≥ 60 bar. Mit solchen Düsen kann die Flüssigkeit gut zerstäubt werden.

Bei einer alternativen Ausführungsvariante ist die Düse eine Niederdruckdüse mit einem Betriebsdruck < 10 bar. Dies hat den Vorteil, dass kein Hochdruck aufgebaut zu werden braucht.

Bevorzugt weist die Befeuchtungsvorrichtung eine Vielzahl von regelmässig verteilten Düsen und Sprühstrahl-Aufweiteinrichtungen auf. Mit Vorteil ist jeder Düse eine Sprühstrahl-Aufweiteinrichtung zugeordnet. Es kann so Gas mit einem praktisch beliebig grossen Strömungsquerschnitt befeuchtet werden.

Im Folgenden wird die erfindungsgemässe Befeuchtungsvorrichtung unter Bezugnahme auf die beigefügten Zeichnungen anhand zweier Ausführungsbeispiele detaillierter beschrieben. Es zeigen:
- Fig. 1 -: einen Längsschnitt durch einen Luftkanal mit einem ersten Ausführungsbeispiel der erfindungsgemässen Befeuchtungsvorrichtung;
- Fig. 2 -: eine Ansicht von vorne der gemäss Fig. 1 im Luftkanal angeordneten Befeuchtungsvorrichtung;
- Fig. 3 -: perspektivisch die Düsen und Sprühstrahl-Aufweiteinrichtungen der Befeuchtungsvorrichtung von Fig. 1;
- Fig. 4 -: eine Düse und eine Sprühstrahl-Aufweiteinrichtung gemäss Fig. 3 in vergrösserter Darstellung, wobei runde Löcher in der Sprühstrahl-Aufweiteinrichtung nur in einem Endbereich und stark vergrössert gezeichnet sind;
- Fig. 5 -: den Ausschnitt A der Sprühstrahl-Aufweiteinrichtung von Fig. 4 in vergrösserter Darstellung;
- Fig. 6 -: die Düse und die Sprühstrahl-Aufweiteinrichtung von Fig. 4 in einer Seitenansicht während des Befeuchtens; und
- Fig. 7 -: perspektivisch die Düsen und Sprühstrahl-Aufweiteinrichtungen eines zweiten Ausführungsbeispiels der erfindungsgemässen Befeuchtungsvorrichtung.

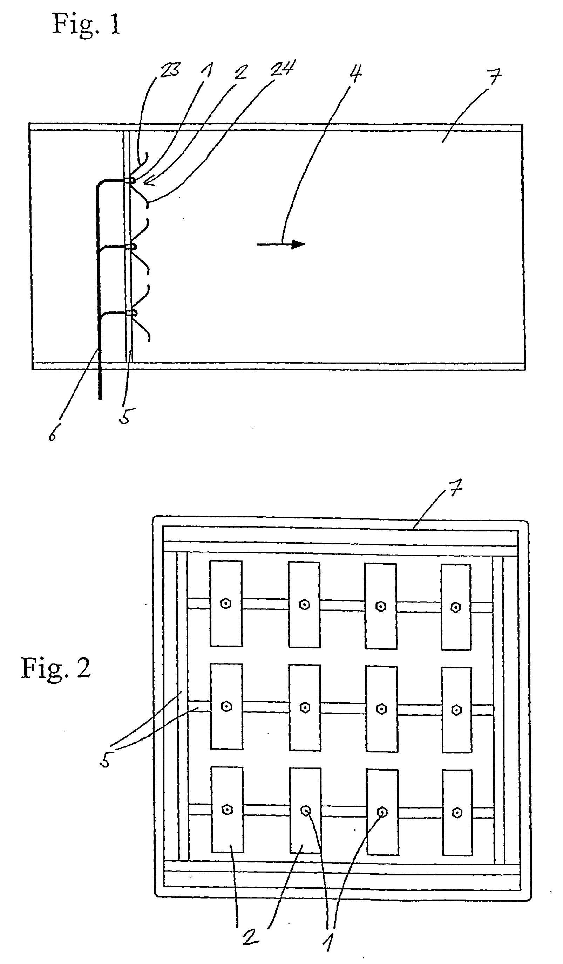

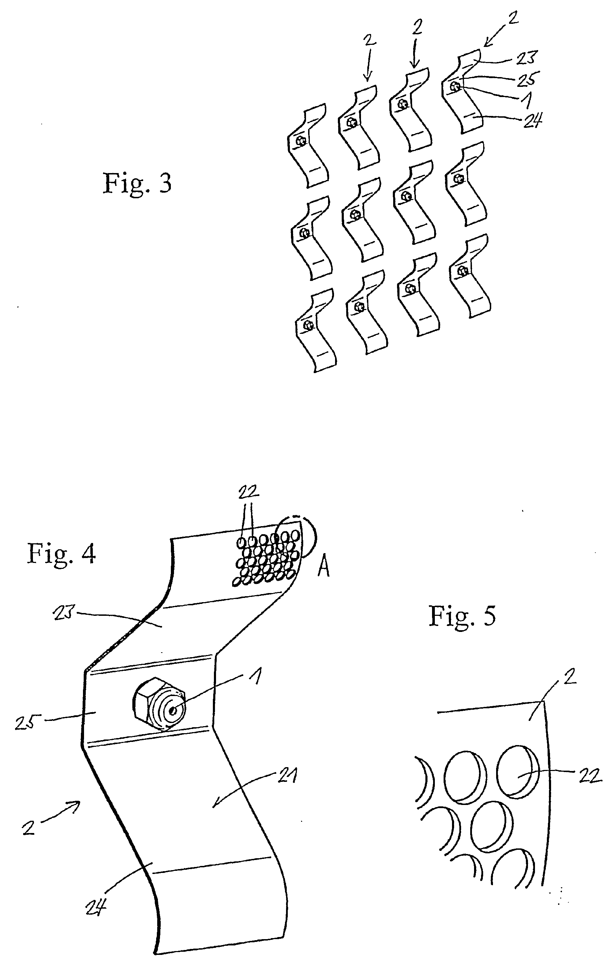

Die Fig. 1 und 2 zeigen Ausschnitte aus einem Luftkanal 7, über den beispielsweise einem Raum Frischluft zugeführt wird. Durch den Luftkanal 7 strömt Luft in der Strömungsrichtung gemäss Pfeil 4. Im Luftkanal 7 ist eine erfindungsgemässe Befeuchtungsvorrichtung angeordnet, die zwölf gleichmässig über den Strömungsquerschnitt verteilte Düsen 1 aufweist, denen jeweils eine Sprühstrahl-Aufweiteinrichtung 2 zugeordnet ist. Die Düsen 1 und die Sprühstrahl-Aufweiteinrichtungen 2 sind an einem Gestell 5 befestigt, welches seinerseits an den Seitenwänden des Luftkanals 7 befestigt ist. Die Düsen 1 werden über Wasserleitungen 6 mit Wasser versorgt, das von diesen dann in Strömungsrichtung 4 der Luft abgesprüht wird, wobei das Wasser zerstäubt wird und die Luft befeuchtet. Die Düsen 1 sind jeweils in einem flachen mittleren Bereich 25 zwischen zwei Schenkeln 23, 24 einer Sprühstrahl-Aufweiteinrichtung 2 angeordnet, was beispielsweise in Fig. 3 deutlich erkennbar ist.

Die Fig. 4 und 5 zeigen, dass die Sprühstrahl-Aufweiteinrichtungen 2 mit einer Vielzahl von Öffnungen 22 in Form von runden Löchern versehen sind. Die Öffnungen 22 sind gleichmässig und ganz über die beiden Schenkel 23, 24 und den mittleren Bereich 25 der Sprühstrahl-Aufweiteinrichtung 2 verteilt, in Fig. 4 sind aber aus Übersichtlichkeitsgründen nur einige Öffnungen 22 am Ende des Schenkels 23 eingezeichnet, und zwar aus Darstellungsgründen stark vergrössert. Der Durchmesser der Öffnungen 22 beträgt in Wirklichkeit etwa 1,5 mm und der Anteil der Öffnungen 22 an der Gesamtfläche der Sprühstrahl-Aufweiteinrichtung 2 beträgt etwa 25%, so dass ein genügend grosser Anteil der auf die Sprühstrahl-Aufweiteinrichtung 2 auftreffenden Luft durch die Öffnungen 22 strömt.

Die Sprühstrahl-Aufweiteinrichtungen 2 sind im vorliegenden Fall geeignet gebogene Lochbleche. Solche sind relativ einfach und kostengünstig herstellbar. Denkbar sind aber insbesondere auch Sprühstrahl-Aufweiteinrichtungen 2 aus Kunststoff, Keramik etc.

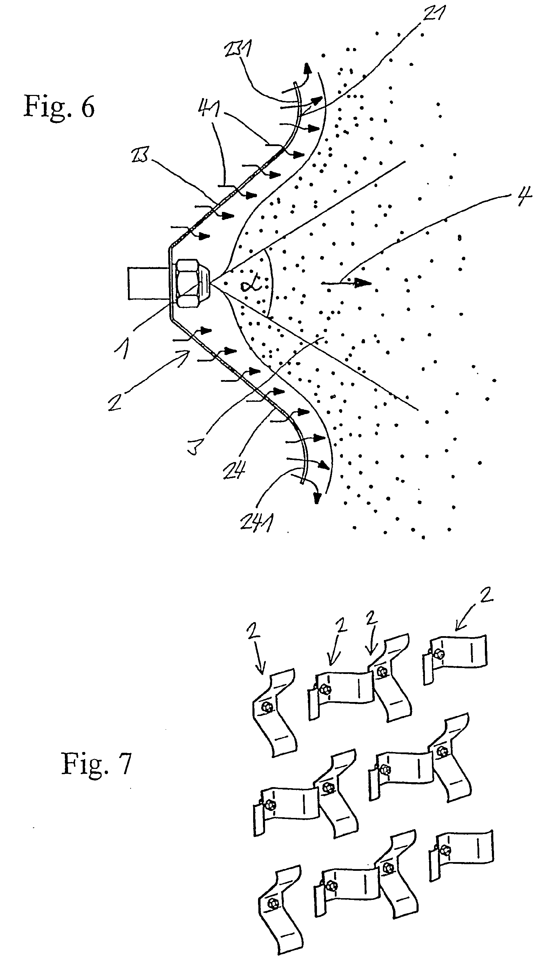

Aus Fig. 6 ist die Funktion der Sprühstrahl-Aufweiteinrichtung 2 ersichtlich. Die Düse 1 sprüht im Betrieb Wasser ab, das einen Sprühstrahl 3 mit einem Öffnungswinkel α gleich nach der Düse 1 bildet. Der Öffnungswinkel α hängt von der gewählten Düse 1 ab und beträgt im vorliegenden Fall ca. 65°. Es handelt sich hier um eine Hochdruckdüse mit einem Betriebsdruck von 60 bar, einsetzbar sind aber auch Düsen 1 mit einem anderen Bertriebsdruck, insbesondere auch Niederdruckdüsen. Düsen 1 mit unterschiedlichen Sprühwinkeln α und Betriebsdrücken sind im Handel erhältlich.

Die beiden Schenkel 23, 24 der Sprühstrahl-Aufweiteinrichtung 2 sind in einem Winkel zur Strömungsrichtung 4 der Luft angeordnet, der hier gleich dem halben Öffnungswinkel α + ca. 10° ist. Die Sprühstrahl-Aufweiteinrichtung 2 lenkt die auftreffende Luft grösstenteils nach aussen, insbesondere nach oben und unten, und sorgt auf diese Weise für einen Unterdruck zwischen dem Sprühstrahl 3 und der dem Sprühstrahl 3 zugewandten Seite 21 der Sprühstrahl-Aufweiteinrichtung 2. Durch diesen Unterdruck werden Wasserteilchen am Rande des Sprühstrahls 3 nach aussen gesogen, wodurch der Sprühstrahl 3 aufgeweitet wird. Da ein gewisser Anteil der auftreffenden Luft gemäss den Pfeilen 41 durch die Öffnungen 22 der Sprühstrahl-Aufweiteinrichtung 2 strömt, wird die Aufweitung des Sprühstrahls 3 aufgrund der auf den Sprühstrahl 3 auftreffenden Luft begrenzt. Zwischen der Seite 21 der Sprühstrahl-Aufweiteinrichtung 2 und dem Sprühstrahl 3 bildet sich ein Luftpolster, das entlang der Seite 21 strömt. Dieses Luftpolster verhindert weitgehend ein Benetzen der Sprühstrahl-Aufweiteinrichtung 2. Die Enden 231, 241 der beiden Schenkel 23, 24 der Sprühstrahl-Aufweiteinrichtung 2 sind nach aussen gebogen, um eine Wirbelbildung und somit ein Zurückreissen der Wasserteilchen zu verhindern.

Bei diesem ersten Ausführungsbeispiel der erfindungsgemässen Befeuchtungsvorrichtung gemäss den Fig. 1 bis 6 erfolgt die Aufweitung der Sprühstrahlen 3 durch die Sprühstrahl-Aufweiteinrichtungen 2 grösstenteils nach oben und unten, da die Sprühstrahl-Aufweiteinrichtungen 2 alle vertikal angeordnet sind, d.h. jeweils ein Schenkel 23 sich oben und ein Schenkel 24 sich unten befindet.

Bei dem in Fig. 7 dargestellten zweiten Ausführungsbeispiel der erfindungsgemässen Befeuchtungsvorrichtung sind die Sprühstrahl-Aufweiteinrichtungen 2 abwechslungsweise vertikal und horizontal ausgerichtet. Dies kann allenfalls bei weiter auseinander liegenden Düsen 1 eine gleichmässigere Verteilung der zerstäubten Wasserteilchen bringen.

Zu den vorbeschriebenen Befeuchtungsvorrichtungen sind weitere konstruktive Variationen realisierbar. Hier ausdrücklich erwähnt sei noch:
- Die Sprühstrahl-Aufweiteinrichtungen 2 können anstatt zweischenklig auch mehrschenklig oder teilweise konisch ausgebildet sein.
- Die Öffnungen 22 können auf Teilbereiche der Sprühstrahl-Aufweiteinrichtung 2 beschränkt sein. Insbesondere ist es denkbar, dass der mittlere Bereich 25 der Sprühstrahl-Aufweiteinrichtung 2 bis auf den Durchlass für die Düse 1 keine Öffnungen aufweist.

## Patentansprüche

1. Befeuchtungsvorrichtung zur Befeuchtung von Gas in einem Gasstrom, mit mindestens einer Düse (1), die im Gasstrom in Strömungsrichtung (4) eine Flüssigkeit absprüht, und einer Einrichtung (2) zur Aufweitung des von der Düse (1) erzeugten Sprühstrahls (3), die ausgebildet ist, um den Gasstrom im Bereich der Düse (1) teilweise umzulenken, so dass zwischen der Sprühstrahl-Aufweiteinrichtung (2) und dem Sprühstrahl (3) ein Unterdruck entsteht, durch den der Sprühstrahl (3) aufgeweitet wird, wobei die Sprühstrahl-Aufweiteinrichtung (2) den Gasstrom zumindest teilweise so durch sie durchströmen lässt, dass durchströmendes Gas eine Benetzung ihrer dem Sprühstrahl (3) zugewandten Seite (21) zumindest vermindert, **dadurch gekennzeichnet, dass** die Sprühstrahl-Aufweiteinrichtung (2) mindestens zweischenklig ausgebildet ist.

2. Befeuchtungsvorrichtung nach Anspruch 1, **dadurch gekennzeichnet, dass** die Sprühstrahl-Aufweiteinrichtung (2) so ausgebildet ist, dass das durchströmende Gas die Aufweitung des Sprühstrahls (3) begrenzt.

3. Befeuchtungsvorrichtung nach Anspruch 1 oder 2, **dadurch gekennzeichnet, dass** die Sprühstrahl-Aufweiteinrichtung (2) so ausgebildet ist, dass das durchströmende Gas ein entlang ihrer dem Sprühstrahl (3) zugewandten Seite (21) strömendes Gaspolster bildet.

4. Befeuchtungsvorrichtung nach einem der Ansprüche 1 bis 3, **dadurch gekennzeichnet, dass** die Sprühstrahl-Aufweiteinrichtung (2) eine Vielzahl von Öffnungen (22) aufweist, deren Öffnungsquerschnittsfläche jeweils 0,2 mm² - 30 mm², vorzugsweise 1 mm² - 3 mm², beträgt.

5. Befeuchtungsvorrichtung nach Anspruch 4, **dadurch gekennzeichnet, dass** der Anteil der Öffnungen (22) an der Fläche der Sprühstrahl-Aufweiteinrichtung (2) 10%-40%, vorzugsweise 20%-30%, beträgt.

6. Befeuchtungsvorrichtung nach Anspruch 4 oder 5, **dadurch gekennzeichnet, dass** die Öffnungen (22) runde Löcher mit einem Durchmesser von maximal 5 mm, vorzugsweise mit einem Durchmesser von 1 mm - 2 mm, sind.

7. Befeuchtungsvorrichtung nach einem der Ansprüche 1 bis 6, **dadurch gekennzeichnet, dass** die Sprühstrahl-Aufweiteinrichtung (2) zumindest teilweise flächig ausgebildet und in einem Winkel zur Strömungsrichtung (4) des Gasstroms angeordnet ist, der gleich dem halben Öffnungswinkel (α) des Sprühstrahls (3) ± 30°, vorzugsweise ± 10°, ist.

8. **Befenchtungsvorrichtung nach Anspruch 7, dadurch gekennzeichnet, dass die Sprühstrahl-Aufweiteinrichtung (2) in Strömungsrichtung (4) des Gasstroms gesehen am Ende nach aussen vom Sprühstrahl (3) weg gebogen ist.**

9. Befeuchtungsvorrichtung nach einem der Ansprüche 1 bis 8, **dadurch gekennzeichnet, dass** die Sprühstrahl-Aufweiteinrichtung (2) zweischenklig ausgebildet ist und der Sprühstrahl (3) sich zwischen den beiden Schenkeln (23, 24) aufweitet.

10. Befeuchtungsvorrichtung nach einem der Ansprüche 1 bis 9, **dadurch gekennzeichnet, dass** die Düse (1) eine Hochdruckdüse mit einem Betriebsdruck ≥ 10 bar, vorzugsweise ≥ 60 bar, ist.

11. Befeuchtungsvorrichtung nach einem der Ansprüche 1 bis 9, **dadurch gekennzeichnet, dass** die Düse (1) eine Niederdruckdüse mit einem Betriebsdruck < 10 bar ist.

12. Befeuchtungsvorrichtung nach einem der Ansprüche 1 bis 11, **dadurch gekennzeichnet, dass** sie eine Vielzahl von regelmässig verteilten Düsen (1) und Sprühstrahl-Aufweiteinrichtungen (2) aufweist.

## Claims

1. Moistening apparatus for moistening gas in a gas current, having at least one nozzle (1) which sprays a liquid in the gas current in the direction of flow (4), and a device (2) for widening out the spray jet (3) produced by the nozzle (1), which is constructed so as to partially divert the gas current in the region of the nozzle (1), so that a reduced pressure is formed between the spray jet widening device (2) and the spray jet (3), thereby widening out the spray jet (3), the spray jet widening device (2) allowing the gas current to pass through it at least partially such that the gas flowing through at least reduces the wetting of its side (21) facing the spray jet (3), **characterised in that** the spray jet widening device (2) is constructed with at least two branches.

2. Moistening apparatus according to claim 1, **characterised in that** the spray jet widening device (2) is constructed so that the gas flowing through it limits the widening of the spray jet (3).

3. Moistening apparatus according to claim 1 or 2, **characterised in that** the spray jet widening device (2) is constructed so that the gas flowing through it forms a gas cushion flowing along its side (21) facing the spray jet (3).

4. Moistening apparatus according to one of claims 1 to 3, **characterised in that** the spray jet widening device (2) has a plurality of openings (22), each having a cross-sectional surface area of 0.2 mm² to 30 mm², preferably 1 mm² to 3 mm².

5. Moistening apparatus according to claim 4, **characterised in that** the proportion of the surface area of the spray jet widening device (2) made up by the openings (22) is 10% to 40%, preferably 20% to 30%.

6. Moistening apparatus according to claim 4 or 5, **characterised in that** the openings (22) are round holes with a diameter of not more than 5 mm, preferably with a diameter of 1 mm to 2 mm.

7. Moistening apparatus according to one of claims 1 to 6, **characterised in that** the spray jet widening device (2) is at least partially flat in construction and is arranged at an angle to the direction of flow (4) of the gas current which is equal to half the angle of opening (α) of the spray jet (3) ± 30°, preferably ± 10°.

8. Moistening apparatus according to claim 7, **characterised in that** the spray jet widening device (2) is bent outwards away from the spray jet (3) at the end, viewed in the direction of flow (4) of the gas current.

9. Moistening apparatus according to one of claims 1 to 8, **characterised in that** the spray jet widening device (2) is constructed with two branches and the spray jet (3) widens out between the two branches (23, 24).

10. Moistening apparatus according to one of claims 1 to 9, **characterised in that** the nozzle (1) is a high pressure nozzle with an operating pressure ≥ 10 bar, preferably ≥ 60 bar.

11. Moistening apparatus according to one of claims 1 to 9, **characterised in that** the nozzle (1) is a low pressure nozzle with an operating pressure < 10 bar.

12. Moistening apparatus according to one of claims 1 to 11, **characterised in that** it comprises a plurality of evenly distributed nozzles (1) and spray jet widening devices (2).

## Revendications

1. Dispositif d'humidification pour l'humidification de gaz dans un flux de gaz, comprenant au moins une buse (1), qui pulvérise un liquide dans le flux de gaz dans le sens d'écoulement (4), et un dispositif (2) pour l'élargissement du jet pulvérisé (3) généré par la buse (1), qui est réalisé pour dévier partiellement le flux de gaz dans la zone de la buse (1), de sorte que entre le dispositif d'élargissement du jet pulvérisé (2) et le jet pulvérisé (3) se forme une dépression par laquelle le jet pulvérisé (3) est élargi, le dispositif d'élargissement du jet pulvérisé (2) faisant passer le flux de gaz au moins partiellement à travers ce dispositif de telle sorte que le gaz circulant réduit au moins une humectation de son côté (21) tourné vers le jet pulvérisé (3), **caractérisé en ce que** le dispositif d'élargissement du jet pulvérisé (2) est conçu au moins avec deux branches.

2. Dispositif d'humidification selon la revendication 1, **caractérisé en ce que** le dispositif d'élargissement du jet pulvérisé (2) est réalisé de telle sorte que le gaz circulant limite l'élargissement du jet pulvérisé (3).

3. Dispositif d'humidification selon la revendication 1 ou 2, **caractérisé en ce que** le dispositif d'élargissement du jet pulvérisé (2) est réalisé de telle sorte que le gaz circulant forme un matelas de gaz circulant le long de son côté (21) tourné vers le jet pulvérisé (3).

4. Dispositif d'humidification selon l'une quelconque des revendications 1 à 3, **caractérisé en ce que** le dispositif d'élargissement du jet pulvérisé (2) présente une pluralité d'ouvertures (22) dont la surface de section d'ouverture est respectivement de 0,2 mm² à 30 mm², de préférence 1 mm² à 3 mm².

5. Dispositif d'humidification selon la revendication 4, **caractérisé en ce que** la part des ouvertures (22) par rapport à la surface du dispositif d'élargissement du jet pulvérisé (2) représente 10 % à 40 %, de préférence 20 % à 30 %.

6. Dispositif d'humidification selon la revendication 4 ou 5, **caractérisé en ce que** les ouvertures (22) sont des trous ronds avec un diamètre maximum de 5 mm, de préférence avec un diamètre de 1 à 2 mm.

7. Dispositif d'humidification selon l'une quelconque des revendications 1 à 6, **caractérisé en ce que** le dispositif d'élargissement du jet pulvérisé (2) est réalisé au moins partiellement à plat et est disposé dans un angle par rapport au sens d'écoulement (4) du flux de gaz qui est égal au demi-angle d'ouverture (α) du jet pulvérisé (3) ± 30°, de préférence ± 10°.

8. Dispositif d'humidification selon la revendication 7, **caractérisé en ce que** le dispositif d'élargissement du jet pulvérisé (2), vu dans le sens d'écoulement (4) du flux de gaz, est plié à ses extrémités vers l'extérieur à partir du jet pulvérisé (3).

9. Dispositif d'humidification selon l'une quelconque des revendications 1 à 8, **caractérisé en ce que** le dispositif d'élargissement du jet pulvérisé (2) est réalisé avec deux branches et le jet pulvérisé (3) s'élargit entre les deux branches (23, 24).

10. Dispositif d'humidification selon l'une quelconque des revendications 1 à 9, **caractérisé en ce que** la buse (1) est une buse à haute pression avec une pression de service ≥ 10 bar, de préférence ≥ 60 bar.

11. Dispositif d'humidification selon l'une quelconque des revendications 1 à 9, **caractérisé en ce que** la buse (1) est une buse à basse pression avec une pression de service < 10 bar.

12. Dispositif d'humidification selon l'une quelconque des revendications 1 à 11, **caractérisé en ce qu'**il présente une pluralité de buses (1) et de dispositifs d'élargissement du jet pulvérisé (2) qui sont répartis régulièrement.
